# FASCICULE DE BREVET EUROPEEN

(11) **EP 1 975 261 B1**
(45) Date de publication et mention de la délivrance du brevet: **09.11.2016**
(21) Numéro de dépôt: 08153489.3
(22) Date de dépôt: 28.03.2008
(51) Int. Cl.: C22C 19/05, C23C 28/04, C23C 30/00

(54) **Barrière thermique déposée directement sur superalliages monocristallins**
Wärmesperrschicht, die direkt auf monokristalline Superlegierungen aufgebracht wird
Thermal barrier deposited directly on monocrystalline superalloys

(30) Priorité: 30.03.2007 FR 0754156
(43) Date de publication de la demande: 01.10.2008
(73) Titulaire: SNECMA, 75015 Paris (FR)
(72) Inventeur: Bourlier, Florent, 92130 Issy Les Moulineaux (FR); Le Biavant, Kristell, 64320 Ousse (FR)
(74) Mandataire: Intès, Didier Gérard André

(56) Documents cités:
- EP-A- 0 971 041
- EP-A- 1 201 778
- FR-A- 2 780 983
- LECLERCQ B ET AL: "Thermal conductivity of zirconia-based ceramics for thermal barrier coatings" CIMTEC. INTERNATIONAL CERAMICS CONGRESS AND FORUM ON NEW MATERIALS, vol. 32, no. 10, 2002, pages 365-372, XP008029240
- RAGHAVAN S ET AL: "Thermal properties of zirconia co-doped with trivalent and pentavalent oxides" ACTA MATERIALIA, ELSEVIER, OXFORD, GB, vol. 49, no. 1, 8 janvier 2001 (2001-01-08), pages 169-179, XP002275560 ISSN: 1359-6454
- KIM D-J ET AL: "Phase stability and physical properties of cubic and tetragonal ZrO2 in the system ZrO2-Y2O3-Ta2O5" JOURNAL OF THE AMERICAN CERAMIC SOCIETY, BLACKWELL PUBLISHING, MALDEN, MA, US, vol. 74, no. 12, décembre 1991 (1991-12), pages 3061-3065, XP002275561 ISSN: 0002-7820

## Description

La présente invention concerne un procédé de dépôt d'une barrière thermique sur un superalliage monocristallin.

Les aubes de turbine haute pression des turbomachines doivent conserver leurs propriétés mécaniques, leur résistance à la corrosion, et leur résistance à l'oxydation dans l'environnement agressif des gaz à très haute température (plus de 1000°C) éjectés à haute vitesse. Les superalliages résistant à haute température les plus performants actuellement (il s'agit idéalement de superalliages monocristallins) ont, dans cet environnement, des performances mécaniques et une durée de vie insuffisantes. Pour cette raison, il est nécessaire de recouvrir ces superalliages avec une barrière thermique. EP 1201778 décrit un matériau en superalliage résistant à l'oxydation et de faible densité, capable de retenir un revêtement de barrière thermique sans couche de liaison. La composition du superalliage à base nickel consiste essentiellement en (en pourcentages massiques) : de 6 à 13% de Cr environ ; de 4,5 à 7% d'Al environ ; de 0,5 à 2,5% de Ti environ ; de 3 à 12% de W environ ; jusqu'à 14% de Ta environ ; jusqu'à 15% de Co environ ; de 0,05 à 1,5% de Hf environ ; de 0,003 à 0,040% de Y environ ; jusqu'à 4% de Mo environ ; jusqu'à 1% de Re environ ; jusqu'à 0,1% de C environ ; jusqu'à 0,05% de B environ ; jusqu'à 0,15% de Zr environ ; jusqu'à 2% de Nb environ ; jusqu'à 2% de V environ ; le reste étant essentiellement du Ni. Les revêtements en céramique qui peuvent être utilisés en tant que revêtements de barrière thermique comprennent les oxydes céramiques et les mélanges d'oxydes céramiques. Un superalliage couramment utilisé est par exemple l'alliage dénommé AM1, qui est un superalliage base nickel suivant le brevet US4639280, ayant une composition en masse de 5 à 8% Co, 6,5 à 10% Cr, 0,5 à 2,5% Mo, 5 à 9% W, 6 à 9% Ta, 4,5 à 5,8% Al, 1 à 2% Ti, 0 à 1,5% Nb, C, Zr, B chacun inférieur à 0,01%. Les barrières thermiques utilisées actuellement sont typiquement réalisées en déposant sur le superalliage une couche de céramique. Cette couche de céramique est typiquement à base de zircone (oxyde de zirconium). Cette couche de céramique constitue l'isolation thermique du superalliage, et permet de maintenir la surface du superalliage à des températures où ses performances mécaniques et sa durée de vie sont acceptables. Cependant, afin d'assurer l'ancrage de cette couche de céramique sur le superalliage, il est nécessaire de recouvrir la surface du superalliage d'une sous-couche. Cette sous-couche, qui s'interpose donc entre le superalliage et la céramique, est normalement un composé intermétallique, par exemple un composé du type MCrAlY (où le "M" désigne Ni, Co, ou une combinaison), ou un aluminiure de nickel modifié platine (par exemple NiAlPt). Le platine est typiquement déposé par électrolyse sur le superalliage, opération suivie typiquement par une aluminisation en phase vapeur.

Cette sous-couche, décrite en particulier dans le brevet US 5514482, permet en outre de protéger le superalliage contre le phénomène d'oxydation à haute température. Ainsi, en fonctionnement, la couche d'oxydation se forme à la surface de la sous-couche et non à la surface du superalliage. L'oxyde composant cette couche est typiquement de l'alumine (oxyde d'aluminium), qui se forme par oxydation de l'aluminium contenu dans la sous-couche.

Cependant l'utilisation d'une telle sous-couche présente plusieurs inconvénients. Le dépôt de la sous-couche entraîne des coûts supplémentaires en matière et en procédé. De plus, il complexifie le procédé global de fabrication de la pièce revêtue de barrière thermique. En effet, dans certains cas, le dépôt de la sous-couche doit être effectué avant perçage des trous que comporte la pièce en superalliage, sinon le dépôt électrolytique de la sous-couche risque d'obstruer les trous de plus faible diamètre. Le dépôt doit alors être effectué après l'usinage de la pièce en superalliage et avant le perçage des trous dans cette pièce. Cela implique des trajets supplémentaires de la pièce entre les postes d'usinage/perçage et le poste de dépôt de la sous-couche. Ces trajets sont indésirables car ils augmentent les risques de contamination de la surface de la pièce par des éléments étrangers qui peuvent diminuer la capacité d'accrochage de la céramique déposée ultérieurement sur cette surface.

On note que le procédé utilisé pour le dépôt de la céramique sur la pièce (EBPVD, "Electron Beam Physical Vapor Déposition") est un procédé non électrolytique qui n'occasionne pas de bouchage des trous percés dans cette pièce. Le perçage de la pièce a donc toujours lieu avant le dépôt de la céramique.

Par ailleurs, la couche d'alumine (couche d'oxydation) a tendance à onduler pour suivre les déformations intervenants dans la sous-couche, créant ainsi des régions où le maintien de la céramique par l'alumine ne se fait plus que de manière ponctuelle et où la céramique se détache prématurément. Ce détachement localisé de la couche de céramique de la sous-couche (ou autre surface sur laquelle elle est accrochée) s'appelle l'écaillage. Une fois l'écaillage de la céramique débuté, la pièce se détériore rapidement et n'est plus en mesure de tenir les performances requises.

L'invention vise à proposer un procédé qui permette d'augmenter la durée de vie d'un superalliage revêtu d'une barrière thermique tout en simplifiant la gamme de fabrication de cet ensemble et en diminuant son coût de fabrication.

Ce but est atteint grâce au fait que le superalliage a une composition en masse de 3,5 à 7,5% Cr, 0 à 1,5% Mo, 1,5 à 5,5% Re, 2,5 à 5,5% Ru, 3,5 à 8,5% W, 5 à 6,5% Al, 0 à 2,5% Ti, 4,5 à 9% Ta, 0,08 à 0,12% Hf, 0,08 à 0,12% Si, le complément à 100% étant constitué par Ni et des impuretés éventuelles, et en ce qu'on dépose directement sur ce . superalliage une zircone stabilisée avec au moins un oxyde d'un élément choisi dans le groupe constitué des terres rares, ou encore avec une combinaison d'un oxyde de tantale et d'au moins un oxyde de terre rare, ou enfin avec une combinaison d'un oxyde de niobium et d'au moins un oxyde de terre rare.

Le terme "directement" ci-dessus signifie qu'il n'a pas été déposé de sous-couche entre la zircone et le superalliage. Les superalliages à base nickel possédant la composition ci-dessus sont appelés superalliages MCNG, terme qui sera employé dans toute la description ci-dessous.

Grâce aux dispositions ci-dessus, la gamme de fabrication de la barrière thermique est simplifiée. En effet, d'une part on s'affranchit du dépôt de la sous-couche puisque la zircone est déposée directement sur le superalliage ne comportant pas de sous-couche. D'autre part on peut effectuer les perçages juste après l'usinage de la pièce en superalliage MCNG, ces deux opérations (perçage et usinage) s'effectuant de préférence dans le même atelier. Les risques de contamination de la surface du superalliage sont donc minimisés. Après l'opération de perçage, la pièce est directement emmenée dans l'atelier de dépôt de la couche finale de céramique.

Par rapport aux alliages de l'art antérieur, la durée de vie d'un superalliage sur lequel une barrière thermique a été déposée selon le procédé de la présente invention est augmentée. Cela est dû notamment au fait qu'une céramique à base de zircone déposée sur un superalliage MCNG est moins sensible au phénomène d'ondulation de la couche d'alumine, décrit plus haut. En effet, des essais ont montrés que l'oxydation de l'interface entre la zircone et le superalliage MCNG s'effectue de façon plus uniforme et rectiligne que l'oxydation d'une sous-couche classique. La liaison physique entre l'alumine et la céramique concerne de ce fait une plus grande surface que dans le cas de l'AM1.

Avantageusement, le superalliage a une composition en masse de 3,5 à 5,5% Cr, 0 à 1,5% Mo, 4,5 à 5,5% Re, 2,5 à 5,5% Ru, 4,5 à 6,5% W, 5 à 6,5% Al, 0 à 1,5% Ti, 5 à 6,2% Ta, 0,08 à 0,12% Hf, 0,08 à 0,12% Si, le complément à 100% étant constitué par Ni et des impuretés éventuelles.

Avantageusement, le superalliage a une composition en masse de 3,5 à 5,5% Cr, 0 à 1,5% Mo, 3,5 à 4,5% Re, 3,5 à 5,5% Ru, 4,5 à 6,5% W, 5,5 à 6,5% Al, 0 à 1% Ti, 4,5 à 5,5% Ta, 0,08 à 0,12% Hf, 0,08 à 0,12% Si, le complément à 100% étant constitué par Ni et des impuretés éventuelles.

Des alliages MCNG nus (sans barrière thermique) de ces compositions présentent une durée de vie supérieure aux autres alliages MCNG nus sur tout l'intervalle [950°C; 1150°]. La même conclusion est donc vraie pour des superalliages de ces compositions sur lesquels une barrière thermique a été déposée selon le procédé de la présente invention par rapport aux autres alliages MCNG sur lesquels une barrière thermique a été déposée selon le procédé de la présente invention.

L'invention concerne également une pièce qui, selon l'invention, est constituée d'un superalliage monocristallin ayant une composition en masse de 3,5 à 7,5% Cr, 0 à 1,5% Mo, 1,5 à 5,5% Re, 2,5 à 5,5% Ru, 3,5 à 8,5% W, 5 à 6,5% Al, 0 à 2,5% Ti, 4,5 à 9% Ta, 0,08 à 0,12% Hf, 0,08 à 0,12% Si, le complément à 100% étant constitué par Ni et des impuretés éventuelles, et qu'au moins une partie de sa surface est en contact direct avec une zircone stabilisée avec au moins un oxyde d'un élément choisi dans le groupe constitué des terres rares, ou avec une combinaison d'un oxyde de tantale et d'au moins un oxyde de terre rare, ou avec une combinaison d'un oxyde de niobium et d'au moins un oxyde de terre rare, cette zircone jouant le rôle de barrière thermique.

Ainsi, la zircone stabilisée est en contact direct avec une partie de la surface du superalliage. Le terme "direct" signifie qu'il n'existe pas de sous-couche entre la zircone et la surface du superalliage. On note que lors du dépôt de la céramique puis une fois la pièce en condition de fonctionnement, il se développe à l'interface entre le superalliage et la zircone une couche d'oxydes. Même en présence de cette couche d'oxydes, on considère que la zircone est en contact direct avec le superalliage.

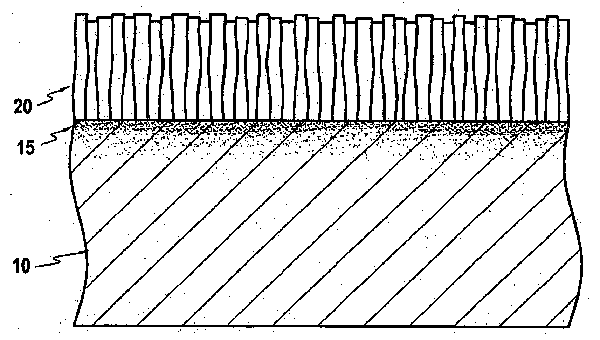

L'invention sera bien comprise et ses avantages apparaîtront mieux, à la lecture de la rescription détaillée qui suit d'un mode de réalisation représenté à titre d'exemple non limitatif. La description se réfère à la figure unique annexée qui est une coupe transversale de la surface d'une pièce selon l'invention.

Comme illustré sur la figure unique, un superalliage 10 monocristallin de type MCNG est recouvert d'une céramique qui est une zircone partiellement ou complètement stabilisée avec au moins un oxyde de terre rare, ou encore avec une combinaison d'un oxyde de tantale et d'au moins un oxyde de terre rare, ou enfin avec une combinaison d'un oxyde de niobium et d'au moins un oxyde de terre rare. Le groupe des terres rares est constitué du cérium, du dysprosium, de l'erbium, de l'europium, du gadolinium, de l'holmium, du lanthane, du lutétium, du néodyme, du praséodyme, du prométhium, du samarium, du scandium, du terbium, du thulium, de l'ytterbium, et de l'yttrium.

De préférence, la zircone peut être stabilisée avec au moins un oxyde d'un élément choisi dans le groupe constitué du dysprosium, de l'erbium, de l'europium, du gadolinium, du samarium, de l'ytterbium, de l'yttrium, ou avec une combinaison d'un oxyde de tantale et d'au moins un oxyde d'un élément de ce groupe, ou avec une combinaison d'un oxyde de niobium et d'au moins un oxyde d'un élément de ce groupe.

Plus préférentiellement, la zircone est stabilisée avec un oxyde d'yttrium.

La céramique est déposée par le procédé connu EBPVD ("Electron Beam Physical Vapor Déposition"). La céramique est fournie sous forme d'une poudre qui, une fois vaporisée par le faisceau d'électrons, vient se condenser sur le superalliage MCNG pour former une couche de céramique 20. A cause de l'utilisation d'un faisceau d'électrons, un vide primaire doit être maintenu dans l'enceinte enfermant le faisceau d'électrons, la céramique à déposer, et le substrat de superalliage MCNG. La couche de céramique 20 déposée par le procédé EBPVD a une structure en colonnes 22 adjacentes sensiblement perpendiculaires à la surface du superalliage 10.

La pièce en superalliage 10 MCNG recouvert de céramique 20 peut être par exemple une aube de turbine haute pression d'une turbomachine. En fonctionnement, c'est-à-dire lorsqu'une telle aube est dans l'environnement agressif des gaz à très haute température (plus de 1500°C) éjectés à haute vitesse, la surface du superalliage s'oxyde progressivement. Il se créé ainsi une couche d'oxydes 15 qui sont des oxydes d'aluminium (alumine) à l'interface entre le superalliage 10 et la couche de céramique 20, comme représenté sur la figure tunique.

Des tests comparatifs ont été effectués par le(s) inventeurs) entre un superalliage monocristallin AM1 de composition massique 5,22% Al, 6,56% Co, 7,52% Cr, 1,98% Mo, 8,01% Ta, 1,20% Ti et 5,48% W, le reste étant du nickel (aux impuretés près) revêtu avec une sous-couche de NiAlPt (Nickel-Aluminium-Platine) puis une couche de zircone yttriée déposée par EBPVD, et un superalliage MCNG de composition massique 3,96% Cr, 1,05% Mo, 6,04% Al, 0,51% Ti, 5,19% Ta, 5,00% W, 3,999% Re, 4,09% Ru, 0,1% Si, 0,12% Hf revêtu avec une couche de zircone yttriée déposée par EBPVD. Des tests comparatifs ont également été effectués entre ce même superalliage monocristallin AM1 revêtu avec une sous-couche de NiAlPt (Nickel-Aluminium-Platine) puis une couche de zircone stabilisée à l'oxyde de dysprosium déposée par EBPVD, et ce même superalliage MCNG revêtu avec une couche de zircone stabilisée à l'oxyde de dysprosium déposée par EBPVD. Les tests ont consistés à faire oxyder des éprouvettes cylindriques (2 mm d'épaisseur, 25 mm de diamètre) suivant un cycle de maintien dans un four à 1100°C sous air suivi d'un refroidissement sous air pulsé durant 15 minutes. Les résultats qui sont donnés dans le tableau 1 correspondent au nombre de cycles subis par les éprouvettes avant écaillage de la céramique sur une aire supérieure à 20% de la surface initialement recouverte. Ils montrent une durée de vie pour le système {MCNG+zircone stabilisée} selon l'invention supérieure à celle du système classique {AM1+NiAlPt+zircone stabilisée}.

Pour ces essais, la teneur massique de l'oxytie de terre rare dans la zircone était respectivement de 6,8% Y₂O₃ et 27,3% Dy₂O₃.

Il est à noter que ces résultats montrent aussi un très bon comportement sous oxydation d'une couche en zircone stabilisée par un autre oxyde que l'oxyde d'yttrium (dans notre cas par un oxyde de dysprosium), cette couche étant déposée sans couche de zircone stabilisée par oxyde d'yttrium intermédiaire.

En effet, jusqu'à présent, l'utilisation de zircone stabilisée par un oxyde autre que l'oxyde d'yttrium nécessitait un dépôt en bicouche : une couche de quelques dizaines de micromètres de zircone stabilisée à l'oxyde d'yttrium sur laquelle était déposée la céramique désirée. En effet, les tentatives de dépôt de zircone stabilisée par un autre oxyde que l'oxyde d'yttrium directement sur tout substrat en superalliage de base nickel revêtu d'une sous-couche de type NiAlPt s'étaient révélées décevantes en terme de tenue en oxydation cyclée. En revanche, grâce à ses très bonnes propriétés mécaniques (ténacité élevée) la zircone stabilisée à l'oxyde d'yttrium résistait aux contraintes.

**Tableau 1**

| **Alliage** | **Sous-couche** | **Céramique** | **Durée de vie** (nombre de cycles) |
|---|---|---|---|
| AM1 | NiAlPt | zircone + oxyde d'yttrium | 1050 |
| AM1 | NiAlPt | zircone + oxyde de dysprosium | 60 |
| MCNG | - | zircone + oxyde d'yttrium | >4500 |
| MCNG | - | zircone + oxyde de dysprosium | 3200 |

La pièce en superalliage MCNG recouvert d'une couche de zircone stabilisée selon l'invention peut être utilisée dans une turbomachine terrestre ou aéronautique. Notamment, cette pièce peut être utilisée dans les turboréacteurs d'avion. Elle peut également être utilisée dans toute machine où ses performances mécanique à haute température sont nécessaires.

## Revendications

1. Procédé de dépôt d'une barrière thermique sur un superalliage (10) monocristallin, **caractérisé en ce que** ledit superalliage (10) a une composition en masse de 3,5 à 7,5% Cr, 0 à 1,5% Mo, 1,5 à 5,5% Re, 2,5 à 5,5% Ru, 3,5 à 8,5% W, 5 à 6,5% Al, 0 à 2,5% Ti, 4,5 à 9% Ta, 0,08 à 0,12% Hf, 0,08 à 0,12% Si, le complément à 100% étant constitué par Ni et des impuretés éventuelles, et **en ce qu'**on dépose directement sur ce superalliage une zircone (20) stabilisée avec au moins un oxyde d'un élément choisi dans le groupe constitué des terres rares, ou avec une combinaison d'un oxyde de tantale et d'au moins un oxyde de terre rare, ou avec une combinaison d'un oxyde de niobium et d'au moins un oxyde de terre rare.

2. Procédé selon la revendication 1, **caractérisé en ce que** ledit superalliage (10) a une composition en masse de 3,5 à 5,5% Cr, 0 à 1,5% Mo, 4,5 à 5,5% Re, 2,5 à 5,5% Ru, 4,5 à 6,5% W, 5 à 6,5% Al, 0 à 1,5% Ti, 5 à 6,2% Ta, 0,08 à 0,12% Hf, 0,08 à 0,12% Si, le complément à 100% étant constitué par Ni et des impuretés éventuelles.

3. Procédé selon la revendication 1, **caractérisé en ce que** ledit superalliage (10) a une composition en masse de 3,5 à 5,5% Cr, 0 à 1,5% Mo, 3,5 à 4,5% Re, 3,5 à 5,5% Ru, 4,5 à 6,5% W, 5,5 à 6,5% Al, 0 à 1% Ti, 4,5 à 5,5% Ta, 0,08 à 0,12% Hf, 0,08 à 0,12% Si, le complément à 100% étant constitué par Ni et des impuretés éventuelles.

4. Procédé selon l'une quelconque des revendications 1 à 3, **caractérisé en ce que** ladite zircone (20) est stabilisée avec au moins un oxyde d'un élément choisi dans le groupe constitué du dysprosium, de l'erbium, de l'europium, du gadolinium, du samarium, de l'ytterbium, de l'yttrium, ou avec une combinaison d'un oxyde de tantale et d'au moins un oxyde d'un élément de ce groupe, ou avec une combinaison d'un oxyde de niobium et d'au moins un oxyde d'un élément de ce groupe.

5. Procédé selon l'une des revendications 1 à 4, **caractérisé en ce que** la zircone (20) est stabilisée avec un oxyde d'yttrium.

6. Pièce **caractérisée en ce qu'**elle est constituée d'un superalliage (10) monocristallin ayant une composition en masse de 3,5 à 7,5% Cr, 0 à 1,5% Mo, 1,5 à 5,5% Re, 2,5 à 5,5% Ru, 3,5 à 8,5% W, 5 à 6,5% Al, 0 à 2,5% Ti, 4,5 à 9% Ta, 0,08 à 0,12% Hf, 0,08 à 0,12% Si, le complément à 100% étant constitué par Ni et des impuretés éventuelles, et **en ce qu'**au moins une partie de sa surface est en contact direct avec une zircone (20) stabilisée avec au moins un oxyde d'un élément choisi dans le groupe constitué des terres rares, ou avec une combinaison d'un oxyde de tantale et d'au moins un oxyde de terre rare, ou avec une combinaison d'un oxyde de niobium et d'au moins un oxyde de terre rare, cette zircone jouant le rôle de barrière thermique

7. Aube de turbine **caractérisée en ce qu'**elle comprend une pièce selon la revendication 6.

8. Turbomachine **caractérisée en ce qu'**elle comprend une aube de turbine selon la revendication 7.

## Patentansprüche

1. Verfahren zum Abscheiden einer Wärmebarriere auf einer monokristallinen Superlegierung (10), **dadurch gekennzeichnet, dass** die Superlegierung (10) eine Massenzusammensetzung von 3,5 bis 7,5 % Cr, 0 bis 1,5 % Mo, 1,5 bis 5,5 % Re, 2,5 bis 5,5 % Ru, 3,5 bis 8,5 % W, 5 bis 6,5 % Al, 0 bis 2,5 % Ti, 4,5 bis 9 % Ta, 0,08 bis 0,12 % Hf, 0,08 bis 0,12 % Si aufweist, wobei die Ergänzung zu 100 % durch Ni und etwaige Verunreinigungen gebildet ist, und dass direkt auf diese Superlegierung ein Zirkonoxid (20) abgeschieden wird, das mit wenigstens einem Oxid eines Elements, das aus der Gruppe bestehend aus den Seltenerdmetallen ausgewählt ist, oder mit einer Kombination aus einem Tantaloxid und wenigstens einem Seltenerdoxid oder mit einer Kombination aus einem Nioboxid und wenigstens einem Seltenerdoxid stabilisiert ist.

2. Verfahren nach Anspruch 1, **dadurch gekennzeichnet, dass** die Superlegierung (10) eine Massenzusammensetzung von 3,5 bis 5,5 % Cr, 0 bis 1,5 % Mo, 4,5 bis 5,5 % Re, 2,5 bis 5,5 % Ru, 4,5 bis 6,5 % W, 5 bis 6,5 % Al, 0 bis 1,5 % Ti, 5 bis 6,2 % Ta, 0,08 bis 0,12 % Hf, 0,08 bis 0,12 % Si aufweist, wobei die Ergänzung zu 100 % durch Ni und etwaige Verunreinigungen gebildet ist.

3. Verfahren nach Anspruch 1, **dadurch gekennzeichnet, dass** die Superlegierung (10) eine Massenzusammensetzung von 3,5 bis 5,5 % Cr, 0 bis 1,5 % Mo, 3,5 bis 4,5 % Re, 3,5 bis 5,5 % Ru, 4,5 bis 6,5 % W, 5,5 bis 6,5 % Al, 0 bis 1 % Ti, 4,5 bis 5,5 % Ta, 0,08 bis 0,12 % Hf, 0,08 bis 0,12 % Si aufweist, wobei die Ergänzung zu 100 % durch Ni und etwaige Verunreinigungen gebildet ist.

4. Verfahren nach einem der Ansprüche 1 bis 3, **dadurch gekennzeichnet, dass** das Zirkonoxid (20) mit wenigstens einem Oxid eines Elements, das aus der Gruppe bestehend aus Dysprosium, Erbium, Europium, Gadolinium, Samarium, Ytterbium, Yttrium ausgewählt ist, oder mit einer Kombination aus einem Tantaloxid und wenigstens einem Oxid eines Elements dieser Gruppe oder mit einer Kombination aus einem Nioboxid und wenigstens einem Oxid eines Elements dieser Gruppe stabilisiert ist.

5. Verfahren nach einem der Ansprüche 1 bis 4, **dadurch gekennzeichnet, dass** das Zirkonoxid (20) mit einem Yttriumoxid stabilisiert ist.

6. Teil, **dadurch gekennzeichnet, dass** es aus einer monokristallinen Superlegierung (10) mit einer Massenzusammensetzung von 3,5 bis 7,5 % Cr, 0 bis 1,5 % Mo, 1,5 bis 5,5 % Re, 2,5 bis 5,5 % Ru, 3,5 bis 8,5 % W, 5 bis 6,5 % Al, 0 bis 2,5 % Ti, 4,5 bis 9 % Ta, 0,08 bis 0,12 % Hf, 0,08 bis 0,12 % Si, wobei die Ergänzung zu 100 % durch Ni und etwaige Verunreinigungen gebildet ist, besteht und dass wenigstens ein Teil seiner Oberfläche in direktem Kontakt mit einem Zirkonoxid (20) steht, das mit wenigstens einem Oxid eines Elements, das aus der Gruppe bestehend aus den Seltenerdmetallen ausgewählt ist, oder mit einer Kombination aus einem Tantaloxid und wenigstens einem Seltenerdoxid oder mit einer Kombination aus einem Nioboxid und wenigstens einem Seltenerdoxid stabilisiert ist, wobei dieses Zirkonoxid die Funktion einer Wärmebarriere übernimmt.

7. Turbinenschaufel, **dadurch gekennzeichnet, dass** sie ein Teil nach Anspruch 6 umfasst.

8. Turbomaschine, **dadurch gekennzeichnet, dass** sie eine Turbinenschaufel nach Anspruch 7 umfasst.

## Claims

1. A method of depositing a thermal barrier on a monocrystalline superalloy (10), the method being **characterized in that** said superalloy (10) has following composition by weight: 3.5% to 7.5% Cr, 0 to 1.5% Mo, 1.5% to 5.5% Re, 2.5% to 5.5% Ru, 3.5% to 8.5% W, 5% to 6.5% Al, 0 to 2.5% Ti, 4.5% to 9% Ta, 0.08% to 0.12% Hf, 0.08% to 0.12% Si, the balance to 100% being constituted by Ni and any impurities, and **in that** a stabilized zirconia (20) is deposited directly on said superalloy, the zirconia (20) being stabilized with at least one oxide of an element selected from the group constituted by rare earths, or with a combination of a tantalum oxide and at least one rare earth oxide, or with a combination of a niobium oxide and at least one rare earth oxide.

2. A method according to claim 1, **characterized in that** said superalloy (10) has the following composition by weight: 3.5% to 5.5% Cr, 0 to 1.5% Mo, 4.5% to 5.5% Re, 2.5% to 5.5% Ru, 4.5% to 6.5% W, 5% to 6.5% Al, 0 to 1.5% Ti, 5% to 6.2% Ta, 0.08% to 0.12% Hf, 0.08% to 0.12% Si, the balance to 100% being constituted by Ni and any impurities.

3. A method according to claim 1, **characterized in that** said superalloy (10) has the following composition by weight: 3.5% to 5.5% Cr, 0 to 1.5% Mo, 3.5% to 4.5% Re, 3.5% to 5.5% Ru, 4.5% to 6.5% W, 5.5% to 6.5% Al, 0 to 1% Ti, 4.5% to 5.5% Ta, 0.08% to 0.12% Hf, 0.08% to 0.12% Si, the balance to 100% being constituted by Ni and any impurities.

4. A method according to any one of claims 1 to 3, **characterized in that** said zirconia (20) is stabilized with at least one oxide of an element selected from the group constituted by dysprosium, erbium, europium, gadolinium, samarium, ytterbium, yttrium, or with a combination of an oxide of tantalum and at least one oxide of an element in said group, or with a combination of an oxide of niobium and at least one oxide of an element of said group.

5. A method according to any one of claims 1 to 4, **characterized in that** the zirconia (20) is stabilized with an yttrium oxide.

6. A part, **characterized in that** it is constituted by a monocrystalline superalloy (10) having the following composition by weight: 3.5% to 7.5% Cr, 0 to 1.5% Mo, 1.5% to 5.5% Re, 2.5% to 5.5% Ru, 3.5% to 8.5% W, 5% to 6.5% Al, 0 to 2.5% Ti, 4.5% to 9% Ta, 0.08% to 0.12% Hf, 0.08% to 0.12% Si, the balance to 100% being constituted by Ni and any impurities, and **in that** at least a portion of its surface is in direct contact with a zirconia (20) stabilized with at least one oxide of an element selected from the group constituted by rare earths, or with a combination of a tantalum oxide and at least one rare earth oxide, or with a combination of a niobium oxide and at least one rare earth oxide, said zirconia acting as a thermal barrier.

7. A turbine blade, **characterized in that** it comprises a part according to claim 6.

8. A turbomachine, **characterized in that** it includes a turbine blade according to claim 7.
